# EUROPÄISCHE PATENTSCHRIFT

(11) **EP 0 675 934 B1**
(45) Veröffentlichungstag und Bekanntmachung des Hinweises auf die Patenterteilung: **11.03.1998**
(21) Anmeldenummer: 94902607.4
(22) Anmeldetag: 17.12.1993
(51) Int. Cl.: C09K 5/04

(54) **ARBEITSSTOFFE FÜR ABSORPTIONSMASCHINEN**
WORKING SUBSTANCES FOR ABSORPTION MACHINES
SUBSTANCES DE TRAVAIL POUR MACHINES A ABSORPTION

(30) Priorität: 17.12.1992 DE 4242602
(43) Veröffentlichungstag der Anmeldung: 11.10.1995
(73) Patentinhaber: KELLER, Jürgen, D-57076 Siegen (DE)
(72) Erfinder: KELLER, Jürgen, Paul-Bonatz-Strasse 9, D-57076 Siegen (DE); PETERS, Ralf, Paul-Bonatz-Strasse 9, D-57076 Siegen (DE)
(74) Vertreter: Münich, Wilhelm, Dr.
(86) Internationale Anmeldenummer: DE9301218
(87) Internationale Veröffentlichungsnummer: WO9413752

(56) Entgegenhaltungen:
- EP-A- 0 208 427
- WO-A-90/12848
- NL-B- 62 164
- US-A- 3 642 059
- CHEMICAL ABSTRACTS, vol. 96, no. 18, 3. Mai 1982, Columbus, Ohio, US; abstract no. 145176d, RADERMACHER, R. ET AL 'Lithium bromide- water solutions as absorbents for ammonia or methylamine' & BRENNST.-WAERME-KRAFT, 34(1), 31-8 1982

## Beschreibung

### Technisches Gebiet

Die Erfindung bezieht sich auf Arbeitsstoffe für Absorptionsmaschinen gemäß dem Oberbegriff des Patentanspruchs 1.

Insbesondere können die Arbeitsstoffe beziehungsweise Arbeitsstoffsysteme für Absorptionsmaschinen wie Absorptionswärmepumpen, Absorptionskältemaschinen, Absorptionswärmetransformatoren und Absorptions-Kompressions-Wärmepumpen und -Kältemaschinen eingesetzt werden.

### Stand der Technik

Zum Stand der Technik bei Absorptionsmaschinen wird auf die nachfolgende Literatur verwiesen:
- Altenkirch, E.: Absorptionskältemaschinen, VEB-Verlag Technik, Berlin, 1954,
- DE-PS 607 059 (Altenkirch, E.), Kontinuierlich wirkende Absorptionskältemaschine.
- Niebergall, W., Sorptionskältemaschinen, Handbuch der Kältetechnik, R. Plank, Hsg., Bd. 7, Springer, Berlin etc., 1959.
- Richter, K.-H., Entscheidungshilfen für die Planung von Absorptions-Kälteanlagen, Verfahrenstechnik 6 (1972), 390 - 399.
- Ziegler, B., Wärmetransformation durch einstufige Sorptionsprozesse mit dem Stoffpaar Ammoniak-Wasser, Dissertation, ETH Nr. 7070, Zürich, 1982.
- Bokelmann, H., Industrielle Anwendung der Absorptionswärmepumpe, Brennstoff-Wärme-Kraft, 40 (1988), 250 - 55.
- Stephan, K., Der Wärmetransformator - Grundlagen und Anwendungen, Chem.-Ing.-Techn., 60 (1988), 335 - 48.
- Plöcker, U. et al., Wärmetransformatoren für die Chemische Industrie aus der Sicht des Anwenders, Chem.-Ing.-Tech., 60 (1988), 103 - 8.

Auf diesen Stand der Technik wird hinsichtlich aller hier nicht näher erläuterten Begriffe ausdrücklich verwiesen.

Absorptionsmaschinen stellen sehr umweltfreundliche, aber verhältnismäßig komplizierte und teure Maschinen zur Erzeugung von Nutzwärme und -kälte dar. Die hohen Investitionskosten, Schwierigkeiten mit der Regelung, ein ungünstiges Teillastverhalten und verhältnismäßig geringe thermische Leistungsziffern, die im Falle von Wärmepumpen in der Regel wenig über 1 liegen, sind ihrer weiten Verbreitung bisher entgegengestanden. Dies gilt aber nicht für Kleinkälteaggregate zur Verwendung in Haushalts-, Hotel- und Freizeitbereich, sowie für Kaltwassersätze und Klimageräte in Staaten wie USA und Japan.

Da die Leistungsziffer, also das Verhältnis von Nutzwärme bzw. -kälte zur aufgewandten Wärme entscheidend von der Wahl eines "geeigneten" Arbeitsstoffpaares abhängt, begannen schon frühzeitig Arbeiten an neuen bzw. optimalen Stoffpaaren. Im Bereich der Kältemaschinen und der Niedertemperatur-Wärmepumpen hat sich das Arbeitsstoffpaar Ammoniak (NH₃) als Kältemittel mit Wasser (H₂O) als Lösungsmittel sowohl in Kleinanlagen als auch in Großanlagen bis zu Leistungen von mehreren Megawatt bewährt. Gewisse Nachteile dieses Stoffpaares sind darin zu sehen, daß beim Austreiben des Ammoniaks im Generator einer Maschine stets gewisse Wasseranteile mitverdampfen.

Da zur Erzielung tiefer Temperaturen möglichst reines Arbeitsmittel benötigt wird, ist es notwendig, einen Arbeitsmitteldampfreiniger (Dephlegmator) in der Anlage vorzusehen. Dieser erhöht naturgemäß die Investitions- und auch die Betriebskosten bzw. senkt die Leistungsziffer des Gesamtprozesses ab.

Die hohen Dampfdrücke des Ammoniaks wirken sich darüber hinaus ungünstig auf die Dimensionierung von Wärmetauschern und Rohrleitungen und die Wärmeübergangszahlen aus. Außerdem sind wässrige Ammoniaklösungen, insbesondere bei höheren Temperaturen, korrosiv, erfordern also die Verwendung von Korrosionsinhibitoren, wie z.B. Chromsalz (Na₂CrO₄).

Von verschiedenen Autoren ist nun vorgeschlagen worden, die Leistungsziffer von Absorptionsmaschinen, in denen das technisch bewährte Arbeitsstoffsystem Ammoniak (NH₃) - Wasser (H₂O) verwendet wird, dadurch zu erhöhen, daß Salze verschiedener Art zugesetzt werden.

Hierzu wird auf die EP-A-0 012 856 sowie die in der prioritätsgleichen DE-PS 28 55 434 genannte Literatur oder auf A. Zimmermann, Experimentelle Untersuchung der Dampf-Flüssigkeit-Phasengleichgewichte im Stoffsystem NH₃-H₂O-LiBr, Dissertation Universität Siegen GH, 1991, verwiesen.

Die Zugabe von Salzen zum Lösungsmittel Wasser ist aber durchaus problematisch. Häufig wird das sogenannte Lösungsfeld von Ammoniak im Druck-Temperatur-Diagramm stark eingeschränkt, d.h. es besteht die Gefahr, daß feste Phasen, z.B. Ammoniak-Salzverbindungen während des Absorptionsprozesses in der Lösung ausfallen und zu ernsten Betriebsstörungen führen. Entsprechende Ergebnisse sind von R. Peters, R. Busse, R., J.U. Keller in "Solid-Liquid Equilibria in the Systems NH₃-H₂O-LiBr and H₂O-LiBr at p = 1 atm in the Range from-35 to 80 °C (Journal of Thermophysics, Vol.14, No.4, 1993) veröffentlicht.

Ferner ist festgestellt worden, daß z.B. die hohe Zugabe von LiBr zu NH₃ - H₂O-Lösungen zwar den Wassergehalt in der Dampfphase reduziert, gleichzeitig aber auch den Partialdruck von Ammoniak erniedrigt. Durch Zugabe von Salz wird also nicht nur Wasser in der flüssigen Phase zurückgehalten, sondern auch Ammoniak !

Außerdem sind wässrige Lösungen von Salzen im allgemeinen sehr korrosiv. Verschiedene der heute zur Verfügung stehenden Korrosionsinhibitoren wirken nicht immer in befriedigender Weise und führen darüber hinaus zu Entsorgungsproblemen.

### Darstellung der Erfindung

Der Erfindung liegt die Aufgabe zu Grunde, die Arbeitsstoffsysteme Ammoniak (NH₃) - Wasser (H₂O) und Methylamin - Wasser durch Zugabe von einem oder mehreren Stoffen zum Lösungsmittel Wasser (H₂O) so weiter zu entwickeln, daß die neuen Arbeitsstoffsysteme zu höheren Leistungszahlen in Absorptionsmaschinen, d.h. zu Energieeinsparungen und zu einer Minderung der Korrosionsprobleme führen.

Eine erfindungsgemäße Lösung dieser Aufgabe ist im Anspruch 1 angegeben. Weiterbildungen der Erfindung sind Gegenstand der abhängigen Ansprüche.

Der Erfindung liegt der Grundgedanke zugrunde, dem Lösungsmittel Wasser im Arbeitsstoffsystem Ammoniak - Wasser oder Methylamin - Wasser eine verhältnismäßig geringe Menge einer Lauge oder eines speziellen Gemisches von Laugen gemäß Anspruch 1 zuzugeben.

Der Zusatz von Laugen hat eine Reihe von überraschenden Vorteilen, die in ihrer Summe zu einer nicht unbeträchtlichen Erhöhung der Leistungszahl der von Ammoniak und Wasser bzw. Methylamin und Wasser betriebenen Absorptionsmaschine führen.

Bei der im Anspruch 2 gekennzeichneten Weiterbildung nimmt die Konzentration der Lauge(n) bezogen auf die Mischung Wasser/Lauge(n) mit fallender tiefster Arbeitstemperatur der Absorberlösung ab.

In jedem Falle ist es von Vorteil, wenn der Anteil der Lauge nicht mehr als 10 Gew.% beträgt; im Anspruch 3 sind bevorzugte Konzentrationsbereiche (Konzentrationswerte ± x Gew %) für die jeweils verwendete tiefste Arbeitstemperatur der Absorberlösung angegeben:

| T/°C | NaOH | KOH | LiOH^{·}H₂O | CsOH^{·}.H₂O | x% |
|---|---|---|---|---|---|
| 40 | 7 | | | | 5 |
| | | 5 | | | 4 |
| | | | 10 | | 7 |
| | | | | 8 | 5 |
| | | | | | |
| 40 | 4 | 2 | | | 1,5 |
| | 5 | | 3 | | 2 |
| | 6 | | | 2 | 1,5 |
| | | 3 | 3 | | 2 |
| | | 4 | | 2 | 1,5 |
| | | | 5 | 4 | 3 |
| | 3 | 3 | | 1,5 | 1 |
| | | | | | |
| 30 | 5 | | | | 3 |
| | | 4 | | | 3 |
| | | | 8 | | 5 |
| | | | | 6 | 4 |
| | | | | | |
| | 3 | 2 | | | 1,5 |
| | 4 | | 2 | | 1,5 |
| | 5 | | | 2 | 1,5 |
| | | 2 | 3 | | 1,5 |
| | | 2 | | 4 | 1,5 |
| | | | 4 | 3 | 2,5 |
| | | | 2 | 2 | 1 |
| | | | | | |
| 20 | 4 | | | | 3 |
| | | 3,5 | | | 3 |
| | | | 6 | | 4 |
| | | | | 5 | 3 |
| | | | | | |
| | 2 | 2 | | | 1,5 |
| | 2 | | 3 | | 1,5 |
| | 4 | | | 2 | 1,5 |
| | | 2 | 2 | | 1,5 |
| | | 2 | | 2 | 1,5 |
| | | | 3 | 3 | 2 |
| | 3 | | 2 | 2 | 1,5 |

Die Zugabe von Laugen hat in jedem Falle die im folgenden unter Bezugnahme auf die Zeichnungen näher beschriebenen Vorteile:

### Kurze Beschreibung der Zeichnungen

Die Erfindung wird nachstehend ohne Beschränkung des allgemeinen Erfindungsgedankens anhand von Ausführungsbeispielen unter Bezugnahme auf die Zeichnung exemplarisch beschrieben, auf die im übrigen bezüglich der Offenbarung aller im Text nicht näher erläuterten erfindungsgemäßen Einzelheiten ausdrücklich verwiesen wird. Es zeigen:
- Fig. 1: ein Druck-Temperatur-Diagramm für das System (NH₃-H₂O, NaOH),
- Fig. 2: ein Blockschaltbild einer Absorptionsmaschine, bei der die erfindungsgemäßen Arbeitsstoffe eingesetzt werden können,
- Fig. 3: den von der in Fig. 2 dargestellten Maschine ausgeführten Kreisprozeß schematisch in einem Druck-Temperatur-Diagramm,
- Fig. 4: ein Meßprotokoll für ein mit einem herkömmlichen Arbeitsstoffsystem und ein mit einem erfindungsgemäßen Arbeitsstoffsystem betriebenes Kühlgerät,
- Fig. 5: eine Darstellung, aus der die mit der Erfindung erzielten Vorteile hervorgehen.

### Darstellung von Ausführungsbeispielen

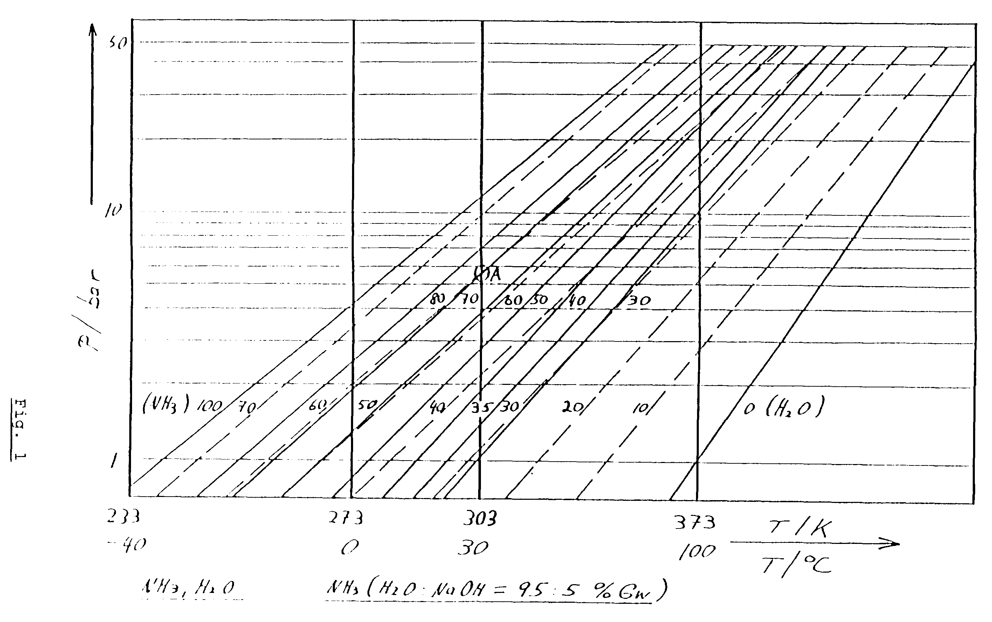

Im folgenden sollen die mit der erfindungsgemäßen Zugabe einer Lauge beziehungsweise einer Mischung von Laugen erzielten Vorteile exemplarisch erläutert werden:
1. Reduktion des Wassergehaltes in der Dampfphase über einer flüssigen Phase bestehend aus Ammoniak, Wasser und Lauge:
   Im Kondensator bzw. Verdampfer einer Absorptionskältemaschine steht damit sehr reines Arbeitsmittel zu Verfügung. Dadurch können tiefere Verdampfungstemperaturen als bei wasserhaltigem Ammoniak erzielt werden. Außerdem wird der Dephlegmator, d.h. der Arbeitsmitteldampfreiniger, in Anlagen herkömmlicher Bauart überflüssig.
2. In der Flüssigphase ergibt sich bei vorgegebenem Druck und Temperatur im laugenhaltigen Gemisch eine Anreicherung von Ammoniak gegenüber der reinen Ammoniak-Wasser-Mischung:
   Dies wird anhand von Figur 1 näher erläutert, die ein Druck-Temperatur-Diagramm für das System (NH₃-H₂O, NaOH) bei einer auf reines Wasser bezogenen Massenkonzentration von H₂O:NaOH = 95:5 % Gew. beispielhaft zeigt. Im Diagramm sind strichliert die Dampfdruckkurven für das Arbeitsstoffpaar NH₃-H₂O eingetragen. An ihnen sind in der von der Temperaturachse aus ersten Zahlenkolonne die zugehörigen Massenkonzentrationen von Ammoniak in Prozent (%) vermerkt. Die rechte verhältnismäßig steile Linie entspricht der Dampfdruckkurve von Wasser, die äußere linke Linie, die deutlich flacher verläuft, stellt die Dampfdruckkurve von reinem Ammoniak dar. Die durchgezogenen Linien zwischen diesen beiden Dampfdruckkurven sind die Dampfdruckkurven für das Dreistoffsystem (NH₃-H₂O, NaOH).
   Man erkennt z.B. im Zustandspunkt (A) bei 30°C um ca. 5,6 bar, daß in der mit Lauge versetzten Lösung bereits 70 Gew. % Ammoniak enthalten sind, während in der Lösung ohne Lauge in etwa nur 60 Gew. % Ammoniak vorhanden sind. Durch diese Anreicherung von Arbeitsmittel im Lösungsmittel kommt es zu einem besseren Verhältnis des Arbeitsmittelmassenstroms zum Lösungsmittelmassenstrom und somit zu einer Vergrößerung der spezifischen, d.h. auf den Lösungsmittelmassenstrom bezogenen Wärmeleistung.
   Bei geringem Ammoniakgehalt unterscheiden sich die Dampfdruckkurven von Ammoniak in Wasser und in stark verdünnter Natronlauge nur sehr wenig voneinander. Unter Umständen kann es in diesem Konzentrationsbereich sogar zu einer gewissen Abmagerung von NH₃ in der Lauge gegenüber dem reinen Wasser kommen.
3. Die Lösungswärme von Ammoniak in stark verdünnten wässrigen Laugen ist deutlich geringer als in reinem Wasser.
   Dadurch wird der Bedarf an Wärme zum Austreiben des Arbeitsstoffes Ammoniak aus einer ammoniakreichen Lösung reduziert und damit die Leistungsziffer des Absorptionsprozesses erhöht.
4. Die Lauge inertisiert die Oberflächen von Behältern und Rohrleitungen aus Stahl wie z.B. St1.4401, St1239 etc.
   Dadurch wird im mittel- und langfristigen Betrieb ein Korrosionsinhibitor überflüssig.
5. Die Oberfläche von Behältern und Rohrleitungen aus Stahl wird mit einer Schicht überzogen.
   Hierdurch wird der Strömungswiderstand des Lösungsmittels in den Leitungen deutlich vermindert, also die zum Umpumpen benötigte Pumpenleistung reduziert.

Im Anspruch 3 sind vorteilhafte Konzentrationen für verschiedene exemplarisch genannte Laugen beziehungsweise Mischungen von Laugen angegeben. Größere Abweichungen von den im Anspruch 3 genannten Bereichen und insbesondere die Zugabe größerer Mengen von Laugen bringen keine weitere Verbesserung, sondern führen im Gegenteil in der Regel zu technischen Schwierigkeiten.

Bei diesen Lösungen können sich schon bei mittleren Drücken und Temperaturen nicht nur eine, sondern mehrere flüssige Phasen verschiedener Konzentration und darüber hinaus feste Phasen mit schneeiger, nadelartiger oder plattenartiger Struktur bilden, die Ursache ernster Betriebsstörungen sein können.

Die oben angeführten Vorteile können nicht nur in klassischen Absorptionsmaschinen (Wärmepumpe, Kältemaschine, Wärmetransformator), sondern auch in deren Weiterentwicklungen, nämlich mehrstufigen Maschinen, Kompressions-Absorptions-Maschinen und Maschinen mit Wirbelrohrexpansionselementen aller Leistungsklassen, d.h. in Geräten für Haushalt, Gewerbe und Industrie ausgenützt werden.

Die günstigen Wirkungen der Laugenzugabe zum Arbeitsstoffsystem Ammoniak-Wasser sollen im folgenden an Hand von Protokollen vergleichender Messungen erläutert werden. Die Messungen sind an identischen kommerziellen Absorptionskühlgeräten, die nach dem Verfahren von Platen & Munters, d.h. ohne mechanische Flüssigkeitspumpe arbeiten, durchgeführt worden.

Ein Gerät - Standardkühlschrank Nr.4 - ist mit dem Arbeitsstoffsystem Ammoniak-Wasser (und Korrosionsinhibitor) betrieben worden. Das zweite Gerät - Versuchskühlschrank Nr.6/1b - arbeitet mit dem System Ammoniak-Wasser-Natronlauge als Arbeitsstoff.

Als Inertgas ist bei beiden Geräten Wasserstoff verwendet worden.

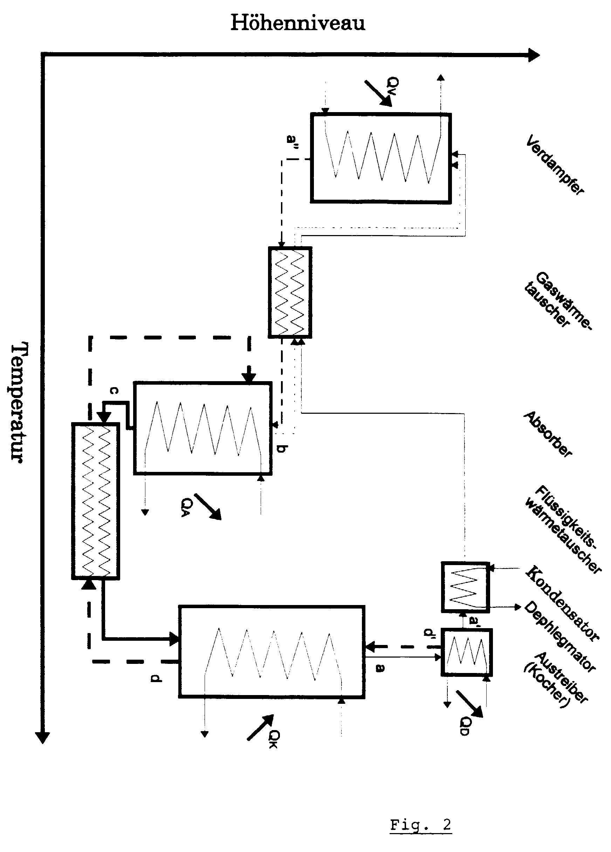

Fig. 2 zeigt in einem Blockschaltbild, das in ein Höhenniveau/Temperatur-Diagramm eingetragen ist, die prinzipielle Funktionsweise der vorstehend genannten Geräte:

Hierbei bedeuten:
- a: Arbeitsmittel- und Lösungsmitteldampf,
- a': Arbeitsmitteldampf,
- a": Arbeitsmitteldampf mit Hilfsgas,
- b: Hilfsgas,
- c: reiche Lösung,
- d: arme Lösung,
- d': teilkondensierte arme Lösung,

Der Lösungsmittelkreislauf ist mit fetten Linien dargestellt, während der Arbeitsmittelkreislauf mit Hilfsgas mit dünnen Linien dargestellt ist.

Im Austreiber (Kocher) verdampft Ammoniak und etwas Wasser aus einer stark ammoniakhaltigen Lösung. Das Wasser wird in einem darüber angeordneten Dephlegmator durch Kühlung des Dampfes kondensiert und fließt in den Kocher zurück. Der gereinigte Ammoniakdampf kondensiert im anschließenden Kondensator und wird im Gaswärmetauscher gekühlt. Das gekühlte, flüssige Ammoniak fließt in einem mit Inertgas gefüllten Verdampfer, verdampft dort bei geringem Partialdruck, d.h. tiefen Temperaturen und strömt danach als kaltes Ammoniak-Inertgas-Gemisch im Gegenstrom durch den Gaswärmetauscher. Die zum Verdampfen des flüssigen Ammoniaks notwendige Wärme wird der Umgebung des Verdampfers, also z.B. dem Kühlgut entnommen. Das Ammoniakgas trifft im Absorber auf ammoniakarmes Lösungsmittel, wird absorbiert, in einem Gegenstromwärmetauscher vorgewärmt und als ammoniakreiche Lösung wieder dem Austreiber zugeführt.

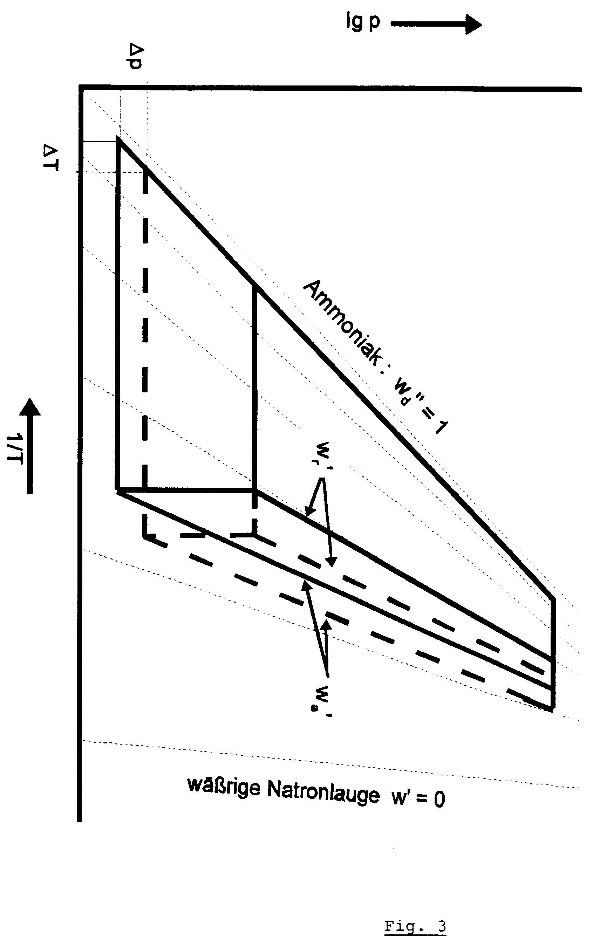

Fig. 3 zeigt den von der in Fig. 2 dargestellten Maschine ausgeführten Kreisprozeß schematisch in einem Druck (ln p) - Temperatur (1/T)-Diagramm. Aus ihm ist auch qualitativ die Wirkung der Laugenzugabe zu erkennen. Die strichlierten Linien beziehen sich auf den Prozeß des Ammoniak-Wasser-Systems. Die durchgezogenen Linien entsprechen dem Ammoniak-Wasser-Laugen System. Durch Zugabe von Lauge kann der Ab- und Desorptionsprozeß zu etwas höheren Ammoniakkonzentrationen verschoben werden. Dadurch kann die tiefste, beim Eintritt des flüssigen Ammoniak in den Verdampfer erzielbare Verdampfungstemperatur entsprechend abgesenkt werden.

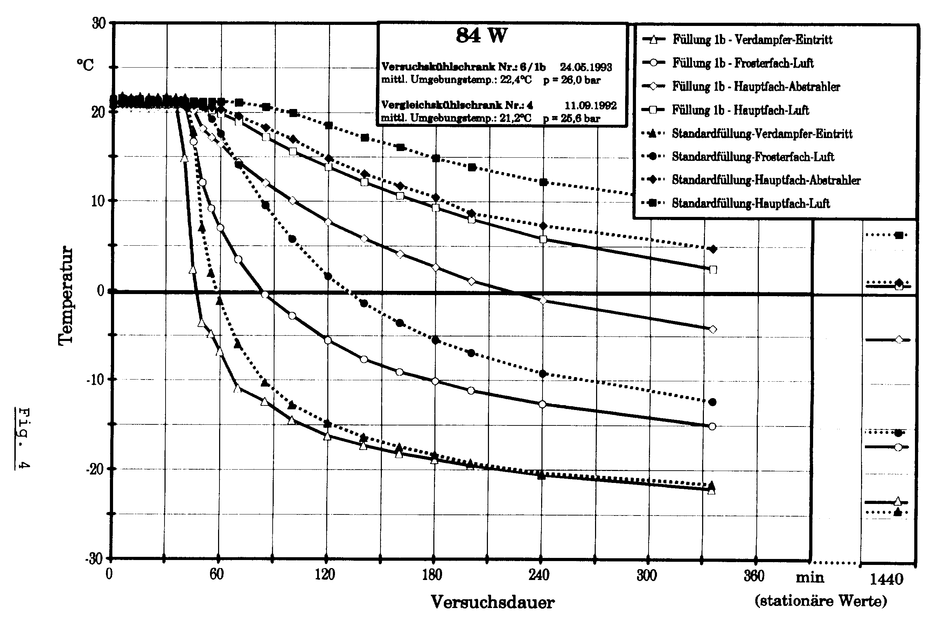

Fig. 4 zeigt ein Meßprotokoll, das die Abkühlprozesse bei den beiden vorstehend beschriebenen Kühlgeräten von einer Umgebungstemperatur T ≤ 21,8 °C auf Betriebstemperatur darstellt.

Gezeigt sind die Verläufe der Lufttemperaturen in den Hauptfächern und in den Tiefkühl- oder Frostfächern der beiden Kühlgeräte. Außerdem sind die Temperaturverläufe an den Eintrittsstellen des Kältemittels in den Verdampfer und an den Hauptfach-Abstrahlern dargestellt.

Die punktierten Linien kennzeichnen Temperaturen im Gerät mit dem Arbeitsgemisch Ammoniak-Wasser.

Die durchgezogenen Linien beschreiben die entsprechenden Temperaturen im Gerät mit Ammoniak-Wasser-Lauge als Arbeitssystem.

Die Heizleistung war in beiden Geräten gleich und während der Versuchsdauer konstant (84 W, elektrisch).

Man erkennt deutlich, daß das laugenhaltige System stets rascher abkühlt als das Standardsystem (Nr.4). Dies kann, insbesondere beim Intervallbetrieb, zu nicht unerheblichen Energieeinsparungen führen. Außerdem sind die für den praktischen Betrieb maßgeblichen Lufttemperaturen im Haupt- und im Frostfach bei den mit Lauge arbeitenden System bei gleicher Heizleistung um ca. 5°C bzw. 1,5°C tiefer als im Standardsystem!

Dies entspricht auch bei gleichen Kühltemperaturen einer Minderung des Heizenergiebedarfes des mit Lauge arbeitenden Systems um ca. 18%.

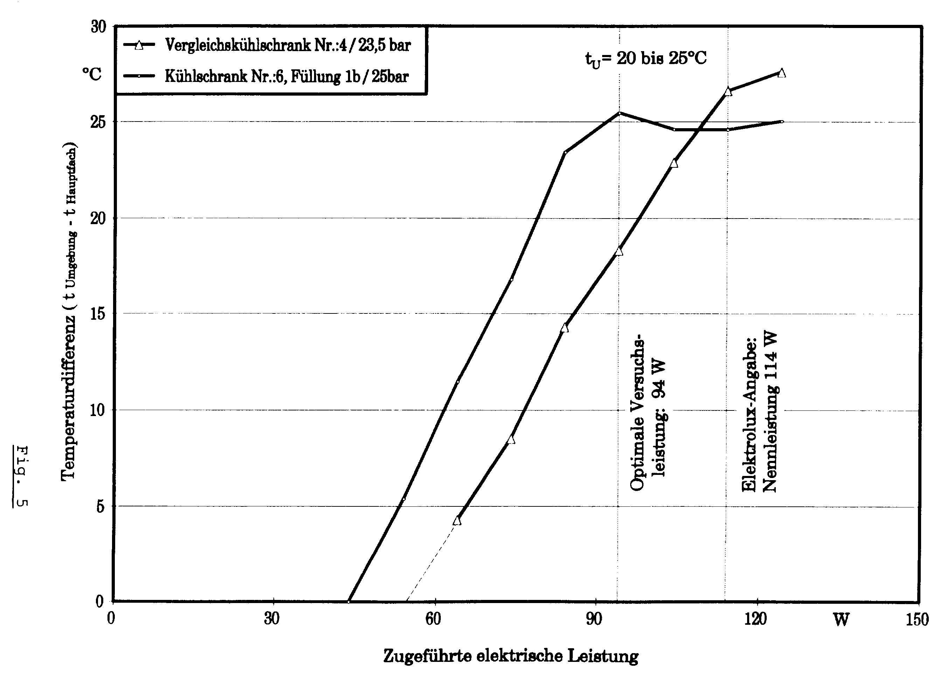

Fig. 5 zeigt die in beiden Kühlgeräten erzielten Differenzen zwischen Umgebungs- und Hauptfachlufttemperatur in stationären Betriebszuständen in Abhängigkeit von der zugeführten Heizleistung (elektrisch).

Das Kühlgerät 6/1b mit Lauge beginnt bei ca. 45 W Heizleistung bereits zu arbeiten und erzielt eine maximale Abkühlung von ca. 25°C gegenüber der Umgebungstemperatur (ca. 22°C) bei einer Heizleistung von 94 W.

Das laugenfreie Vergleichsgerät beginnt ab ca. 60 W zu arbeiten und benötigt zur Erzielung derselben Abkühlung eine Heizleistung von 114 W, d.h. um 21% mehr als das (nicht optimierte) Versuchsgerät mit laugenhaltigem Lösungsmittel.

Zur Bewertung dieser Ergebnisse ist es erforderlich, alle üblichen Kriterien gleichermaßen zu berücksichtigen. Diese sind außer dem Aufwand an Heizenergie und der erbrachten Kühlleistung bzw. der zugehörigen Kälteleistungszahl sicher auch noch das Teillastverhalten bzw. die Regelbarkeit, der apparative Aufwand, Materialerfordernisse (Korrosion) und die Umweltverträglichkeit bzw. Entsorgungsaspekte eines Gerätes.

Bei Würdigung dieser Aspekte ist der erfindungsgemäße Arbeitsstoff herkömmlichen Arbeitsstoffen deutlich überlegen, obwohl bei dem beschriebenen Versuchsgerät noch zahlreiche Verbesserungsmöglichkeiten möglich sind. Auch sind zur Erzielung eines optimalen Betriebs zahlreiche Einzelaspekte zu beachten, die aufeinander abgestimmt sein müssen.

Zu ihnen gehören neben den rein thermodynamischen Eigenschaften des verwendeten Arbeitsstoffsystems auch seine Transporteigenschaften (Viskosität, Wärmeleitfähigkeit, Diffusionskoeffizienten), die verwendeten Füllmengen an Arbeitsmittel, Lösungsmittel und Inertgas, die Umgebungstemperatur, die geometrische Anordnung der Einzelapparate (Verdampfer, Kondensator etc.) im Schwerefeld der Erde, ihre Größe und Form und die Wahl der zu verwendenden Werkstoffe.

Der Einsatz erfindungsgemäßer laugenhaltiger Arbeitsstoffe in bislang mit Ammoniak-Wasser betriebenen Absorptionsgeräten und Maschinen ist unmittelbar und ohne Veränderungen an den Anlagen möglich. Er führt dabei in jedem Falle zu folgenden Vorteilen:
1) Wegfall des Dephlegmators,
2) Reduktion der Austreiberwärme,
3) Entfallen eines Korrosionsinhibitors wie z.B. Chromsalz.

Zur optimalen Ausnutzung dieser Effekte ist aber häufig eine neue Auslegung der Anlage unter Beachtung aller vorgenannten Einzelaspekte und Kriterien von Vorteil.

## Patentansprüche

1. Arbeitsstoffe für Absorptionsmaschinen und insbesondere Absorptionswärmepumpen, Absorptionswärmetransformatoren, Absorptionskältemaschinen ohne bzw. mit Inertgasfüllung und Kompressionsmaschinen mit Lösungsmittelkreislauf sowie Kombinationen solcher Maschinen
mit Ammoniak (NH₃) oder Methylamin (CH₃NH₂) als Arbeitsmittel und mit Wasser als Lösungsmittel, dem weitere Stoffe zugesetzt sind,
dadurch **gekennzeichnet**, daß dem Wasser als weitere Stoffe die verdünnten Laugen NaOH, KOH, LiOH, CsOH einzeln oder binäre, ternäre oder quaternäre Mischungen dieser Laugen zugesetzt sind.

2. Arbeitsstoffe nach Anspruch 1,
dadurch **gekennzeichnet**, daß die Konzentration der Lauge(n) bezogen auf die Mischung Wasser/Lauge(n) mit fallender tiefster Arbeitstemperatur der Absorberlösung abnimmt.

3. Arbeitsstoffe nach Anspruch 1 oder 2,
dadurch **gekennzeichnet**, daß bis zu einer tiefsten Arbeitstemperatur der Absorberlösung folgende Konzentrationen ± x Gew % verwendet werden:
| T/°C | NaOH | KOH | LiOH^{.}H₂O | CsOH^{.}.H₂O | x% |
|---|---|---|---|---|---|
| 40 | 7 | | | | 5 |
| | | 5 | | | 4 |
| | | | 10 | | 7 |
| | | | | 8 | 5 |
| 40 | 4 | 2 | | | 1,5 |
| | 5 | | 3 | | 2 |
| | 6 | | | 2 | 1,5 |
| | | 3 | 3 | | 2 |
| | | 4 | | 2 | 1,5 |
| | | | 5 | 4 | 3 |
| | 3 | 3 | | 1,5 | 1 |
| 30 | 5 | | | | 3 |
| | | 4 | | | 3 |
| | | | 8 | | 5 |
| | | | | 6 | 4 |
| | 3 | 2 | | | 1,5 |
| | 4 | | 2 | | 1,5 |
| | 5 | | | 2 | 1,5 |
| | | 2 | 3 | | 1,5 |
| | | 2 | | 4 | 1,5 |
| | | | 4 | 3 | 2,5 |
| | | | 2 | 2 | 1 |
| 20 | 4 | | | | 3 |
| | | 3,5 | | | 3 |
| | | | 6 | | 4 |
| | | | | 5 | 3 |
| | 2 | 2 | | | 1,5 |
| | 2 | | 3 | | 1,5 |
| | 4 | | | 2 | 1,5 |
| | | 2 | 2 | | 1,5 |
| | | 2 | | 2 | 1,5 |
| | | | 3 | 3 | 2 |
| | 3 | | 2 | 2 | 1,5 |
hierbei sind die Angaben in Gewichtsprozent der ammoniakfreien Ausgangslösung ( Lauge(n) / [Wasser + Lauge(n)]); bei Laugenmischungen geben die Zahlen einer Zeile die Prozente der darüberstehenden reinen Laugen bzw. Laugenhydrate an; der Konzentrationsbereich ± x Gew % ist bei Laugengemischen für jede Komponente vorzusehen.

4. Arbeitsstoffe nach einem der Ansprüche 1 bis 3, dadurch **gekennzeichnet**, daß der Arbeitsmitteldampf weniger als 1 % Gewichtsanteile Wasser und weniger als 0.01% Gewichtsanteile Lauge oder Laugengemische enthält.

5. Verwendung der Arbeitsstoffe nach einem der Ansprüche 1 bis 4 in luftabgeschlossenen Behältern, Rohrleitungen und Armaturen aus Stahl, z.B. St.1.4401, St1239 ohne Korrosionsinhibitor wie z.B. Chromsalze (z.B. Na2CrO4).

6. Verwendung der Arbeitsstoffe nach einem der Ansprüche 1 bis 4 in herkömmlichen Absorptionsmaschinen, d.h. Absorptionswärmepumpen, Absorptionswärmetransformatoren und Absorptionskältemaschinen mit oder ohne Inertgasfüllung.

7. Verwendung der Arbeitsstoffe nach Anspruch 6 in Haushaltsgeräten und Geräten zur Verwendung für ähnliche Zwecke, gewerblichen Kältemaschinen und Kältemöbel wie z.B. offene Gefriertruhen, industrielle Kälteanlagen, Wärmepumpen oder Wärmetransformatoren mit oder ohne Abwärmenutzung.

8. Verwendung der Arbeitsstoffe nach einem der Ansprüche 1 bis 4 in Absorptionsmaschinen mit Wirbelrohrentspannungselementen.

9. Verwendung der Arbeitsstoffe nach einem der Ansprüche 1 bis 4 in Absorptionsmaschinen unter Verzicht auf Arbeitsmitteldampfreiniger bzw. Dephlegmator.

## Claims

1. Working substances for absorption machines, particularly absorption heat pumps, absorption heat transformers, absorption refrigerators without or with inert-gas charge, respectively, and compression machines with solvent circulation, as well as combinations of such machines operating on ammonia (NH₃) or methylamine (CH₃NH₂) as working fluid and water as solvent to which other substances are added,
**characterized** in that the diluted alkaline solutions NaOH, KOH, LiOH, CsOH individually, or binary, ternary or quaternary mixtures of these alkaline solutions are added as additional substances to the water.

2. Working substances according to Claim 1,
**characterized** in that the concentration of said alkaline solution(s) relative to the water/alkaline solution(s) mixture decreases as the lowest operating temperature of the absorber solution goes down.

3. Working substances according to Claim 1 or 2,
**characterized** in that the following concentrations ± x % by weight are used up to a lowest operating temperature of the absorber solution:
| T/°C | NaOH | KOH | LiOH•H₂O | CsOH^{.}•H₂O | x % |
|---|---|---|---|---|---|
| 40 | 7 | | | | 5 |
| | | 5 | | | 4 |
| | | | 10 | | 7 |
| | | | | 8 | 5 |
| 40 | 4 | 2 | | | 1.5 |
| | 5 | | 3 | | 2 |
| | 6 | | | 2 | 1.5 |
| | | 3 | 3 | | 2 |
| | | 4 | | 2 | 1,5 |
| | | | 5 | 4 | 3 |
| | 3 | 3 | | 1.5 | 1 |
| 30 | 5 | | | | 3 |
| | | 4 | | | 3 |
| | | | 8 | | 5 |
| | | | | 6 | 4 |
| | 3 | 2 | | | 1.5 |
| | 4 | | 2 | | 1.5 |
| | 5 | | | 2 | 1.5 |
| | | 2 | 3 | | 1.5 |
| | | 2 | | 4 | 1.5 |
| | | | 4 | 3 | 2.5 |
| | | | 2 | 2 | 1 |
| 30 | 4 | | | | 3 |
| | | 3.5 | | | 3 |
| | | | 6 | | 4 |
| | | | | 5 | 3 |
| | 2 | 2 | | | 1.5 |
| | 2 | | 3 | | 1.5 |
| | 4 | | | 2 | 1.5 |
| | | 2 | 2 | | 1.5 |
| | | 2 | | 2 | 1.5 |
| | | | 3 | 3 | 2 |
| | 3 | | 2 | 2 | 1.5 |
wherein the data is given in percent by weight of the ammonia-free parent solution (alkaline solution(s) / [water + alkaline solution(s)]; in the case of mixtures of alkaline solutions the figures in one line reflect the percentages of the pure alkaline solutions or alkaline solution hydrates thereabove; the concentration range ± x % by weight must be provided for each constituent in the case of alkaline solution mixtures.

4. Working substances according to any of Claims 1 to 3,
**characterized** in that the working substance vapour contains less than 1% of parts by weight of water and less than 0.01 % parts by weight of the alkaline solution or alkaline solution mixtures.

5. Use of the working substances according to any of Claims 1 to 4 in containers out of contact with air, in tubes and fittings made of steel, e.g. St.1.4401, St1239, without corrosion inhibitors such as chromium salts (e.g. Na₂CrO₄).

6. Use of the working substances according to any of Claims 1 to 4 in conventional absorption machines, i.e. absorption heat pumps, absorption heat transformers, absorption refrigerators without or with inert-gas charge, respectively.

7. Use of the working substances according to Claim 6 in household equipment and equipment for application for similar purposes, industrial refrigerators and refrigerator furniture such as open chest freezers, industrial refrigerating installations, heat pumps or heat transformers with or without waste-heat recovery.

8. Use of the working substances according to any of Claims 1 to 4 in absorption machinery equipped with vortex-tube relieving elements.

9. Use of the working substances according to any of Claims 1 to 4 in absorption machines with omission of a working-substance vapour cleaner or dephlegmator, respectively.

## Revendications

1. Substances de travail pour machines à absorption, en particulier des pompes de chaleur à absorption, des transformateurs de chaleur à absorption, machines frigorifiques à absorption sans ou respectivement à charge de gaz inerte, et des machines à compression à circulation d'un solvant, ainsi que des combinaisons de telles machines fonctionnant à ammoniac (NH₃) ou méthylamine (CH₃NH₂) comme substance active et de l'eau comme solvant, auquel des substances additionnelles sont ajoutées,
**caractérisées** en ce que les lessives étendues NaOH, KOH, LiOH, CsOH individuelles ou des mélanges binaires, ternaires ou quaternaires de ces lessives sont ajoutées à l'eau comme substances additionnelles.

2. Substances de travail selon la revendication 1,
**caractérisées** en ce que la concentration de ladite ou desdites lessive(s), relative au mélange l'eau/lessive(s), décroît plus, plus tombe la température de régime la plus basse de la solution absorbeur.

3. Substances de travail selon la revendication 1 ou 2,
**caractérisées** en ce que les concentrations suivantes ± x % en poids sont employées jusqu'à une température de régime la plus basse de la solution absorbeur:
| T/°C | NaOH | KOH | LiOH•H₂O | CsOH^{.}•H₂O | x % |
|---|---|---|---|---|---|
| 40 | 7 | | | | 5 |
| | | 5 | | | 4 |
| | | | 10 | | 7 |
| | | | | 8 | 5 |
| 40 | 4 | 2 | | | 1.5 |
| | 5 | | 3 | | 2 |
| | 6 | | | 2 | 1.5 |
| | | 3 | 3 | | 2 |
| | | 4 | | 2 | 1,5 |
| | | | 5 | 4 | 3 |
| | 3 | 3 | | 1.5 | 1 |
| 30 | 5 | | | | 3 |
| | | 4 | | | 3 |
| | | | 8 | | 5 |
| | | | | 6 | 4 |
| | 3 | 2 | | | 1.5 |
| | 4 | | 2 | | 1.5 |
| | 5 | | | 2 | 1.5 |
| | | 2 | 3 | | 1.5 |
| | | 2 | | 4 | 1.5 |
| | | | 4 | 3 | 2.5 |
| | | | 2 | 2 | 1 |
| 30 | 4 | | | | 3 |
| | | 3.5 | | | 3 |
| | | | 6 | | 4 |
| | | | | 5 | 3 |
| | 2 | 2 | | | 1.5 |
| | 2 | | 3 | | 1.5 |
| | 4 | | | 2 | 1.5 |
| | | 2 | 2 | | 1.5 |
| | | 2 | | 2 | 1.5 |
| | | | 3 | 3 | 2 |
| | 3 | | 2 | 2 | 1.5 |
où les données correspondent aux pourcentages en poids de la solution de départ sans ammoniac (lessive(s) / [eau + lessive(s)]); au cas de mélanges de lessives les données dans une ligne indiques les pourcentages des lessives pures ou des hydrates des lessives ci-dessus; la gamme de concentration ± x % en poids doit être envisagée pour chaque constituant au cas de mélanges de lessives.

4. Substances de travail selon une quelconque des revendicaticns 1 à 3,
**caractérisées** en ce que la vapeur de la substance de travail contient moins que 1 % de fractions en poids de l'eau et moins que 0.01 **%** de fractions en poids de la lessive ou des mélanges de lessives.

5. Emploi des substances de travail selon une quelconque des revendications 1 à 4 dans des conteneurs à l'abri de l'air, canalisations et robinetterie en acier, par exemple en St.1.4401. St1239, sans inhibiteurs de corrosion comme des sels chromeux (par exemple Na₂CrO₄).

6. Emploi des substances de travail selon une quelconque des revendications 1 à 4 dans des machines à absorption conventionnelles, c'est à dire des pompes de chaleur à absorption, des transformateurs de chaleur à absorption, machines frigorifiques à absorption sans ou respectivement à charge de gaz inerte.

7. Emploi des substances de travail selon la revendication 6 dans des appareils domestiques et appareils pour l'emploi aux fins similaires, machines frigorifiques et meubles frigorifiques industriels, par exemple des congélateurs-bahuts ouverts, des installations frigorifiques industrielles, des pompes de chaleur ou des transformateurs de chaleur à ou sans récupération thermique.

8. Emploi des substances de travail selon une quelconque des revendications 1 à 4 dans des machines à absorption équipées des éléments de détente à tube à tourbillonnement.

9. Emploi des substances de iravail selon une quelconque des revendications 1 à à dans des machines à absorption à omission d'un produit de purification de la vapeur de substance de travail ou respectivement d'un déflegmateur.
